# EUROPEAN PATENT APPLICATION

(11) **EP 3 428 728 A1**
(43) Date of publication of application: **16.01.2019**
(21) Application number: 18177387.0
(22) Date of filing: 12.06.2018
(51) Int. Cl.: G03G 15/00, G06F 1/32, H04N 1/00

(54) **IMAGE FORMING APPARATUS AND CONTROL METHOD**

(30) Priority: 13.07.2017 JP 2017137064
(71) Applicant: Kabushiki Kaisha Toshiba, Minato-ku Tokyo 105-8001 (JP); Toshiba TEC Kabushiki Kaisha, Tokyo 141-8562 (JP)
(72) Inventor: AOKI, Noriaki, Shinagawa-ku, Tokyo 141-8562 (JP)
(74) Representative: Takeuchi, Maya

(57) **Abstract**

In accordance with an embodiment, an image forming apparatus includes a power supply having a maximum power output, a plurality of power loads selectively connectable to the power supply, wherein the sum of the power drawable by all of the power loads exceeds the maximum power output of the power supply; and a controller configured to: Determine the power loads to be operable during an operation of the image forming apparatus, determine whether the total drawable power of the loads which will be operable during the operation of the image forming apparatus exceeds the maximum power output of the power supply; and if the total drawable power of the loads which are operable during the operation of the image forming apparatus exceeds the maximum power output of the power supply, limit the power drawable by at least one load such that the sum of the drawable power of all the loads is less than or equal to the maximum power output of the power supply.

## Description

### FIELD

The present invention relates to the field of an image forming technology in general, and embodiments described herein relate in particular to an image forming apparatus and a control method.

### BACKGROUND

There is an image forming apparatus such as a MFP (multifunction peripheral), a copying device or a printer which can have attached thereto selectively controlled additional devices such as a finisher, a sheet feed device or an automatic document feed device. Such an image forming apparatus is provided with a large output capacity power supply unit which can operate in a state of supplying the largest amount of power to operate even if various combinations of the selectively controlled additional devices are mounted thereto. However, the larger the capacity of the power supply unit, the larger the size thereof, which is a factor increasing the size of the image forming apparatus.

To solve such problem, there is provided an image forming apparatus, comprising: a power supply having a maximum power output; a plurality of power loads selectively connectable to the power supply, wherein the sum of the power drawable by all of the power loads exceeds the maximum power output of the power supply; and a controller configured to: determine the power loads to be operable during an operation of the image forming apparatus; determine whether the total drawable power of the loads which will be operable during the operation of the image forming apparatus exceeds the maximum power output of the power supply; and if the total drawable power of the loads which are operable during the operation of the image forming apparatus exceeds the maximum power output of the power supply, limit the power drawable by at least one load such that the sum of the drawable power of all the loads is less than or equal to the maximum power output of the power supply.

Preferably, the image forming apparatus further comprises: a plurality of motors configured to move a sheet on which an image may be printed along a conveyance path; and at least one selectively controlled additional device, wherein if the total power drawable during an operation the image forming device will exceed the maximum power output of the power supply, the controller limits the power drawn by the selectively controlled additional device such that the sum of the drawable power of all the loads during the operation is less than or equal to the maximum power output of the power supply.

Preferably still, the at least one selectively controlled additional device comprises a motor, and the controller limits the power drawn by the motor.

Preferably yet, the image forming apparatus further comprises: a plurality of motors configured to move a sheet on which an image may be printed on a conveyance path therethrough, wherein the controller is configured to limit the power drawn by at least two of the motors of the plurality of motors configured to move a sheet on which an image may be printed on a conveyance path therethrough if the total drawable power of the loads which are operable during the operation of the image forming apparatus exceeds the maximum power output of the power supply, to reduce their rotation speeds by the same amount.

Suitably, the controller is further configured to determine, during an operation of the image forming apparatus, a change in the total drawable power; and if the change in the total drawable power will exceed the maximum power output of the power supply, control one or more loads such that they thereafter draw less than the maximum drawable power thereof.

Suitably still, the controller is configured to determine the power draw of the loads.

Suitably yet, the image forming apparatus further comprises: a plurality of motors configured to move a sheet on which an image may be printed on a sheet feeding path; and at least one selectively controlled additional device; wherein if the total power drawable during an operation the image forming device will exceed the maximum power output of the power supply, the controller limits the power drawn by the selectively controlled additional device such that the power drawn during the operation is less than or equal to the maximum power output of the power supply.

Typically, the at least one additional device comprises a motor having an output speed, and the controller reduces the power drawn by the motor of the at least one additional device by limiting the motor speed to a value less than its maximum operational speed.

The invention also relates to an image forming apparatus, comprising: a power supply section configured to supply electric power to a plurality of electric operation sections operating by consuming electric power; and a controller configured to determine whether the sum of the electric operating loads of the plurality of the electric operation sections used simultaneously in an operation of the image forming apparatus exceeds the maximum power output capacity of the power supply section, and control the operation of the electric operation section to reduce the electric operating load of at least one electric operation section to a modified electrical operating load, among the plurality of the electric operation sections, such that the sum of the electric operating loads of the plurality of the electric operation sections, including the modified electrical operating load, does not exceed the maximum power output capacity of the power supply section.

Preferably, the electric operation section of at least one of the plurality of the electric operation sections comprises a motor.

Preferably still, the controller controls the operation of the electric operation section to change the electrical operating load of at least one electric operation section among the plurality of the electric operation sections if the sum of the electrical operating loads of the plurality of the electric operation sections changes during an operation of the image forming apparatus where a reduction of electrical operating load is already occurring.

Preferably yet, the controller controls the operation of the electric operation section to change the electric operating load of at least one electric operation section among the plurality of the electric operation sections based on a change in the sum of the electric operating loads of the plurality of the electric operation sections, while controlling a reduction of the electrical operating load.

Suitably, if the reduction of the load drawn by a single one of the loads is insufficient to reduce the sum of the loads to not exceed the maximum output power of the power supply, the controller is further configured to: determine which among the loads will first stop drawing power based on the operation to be performed by the image forming apparatus, and reduce the electrical operating load thereof by a greater amount than the reduction amount of a different electrical operating load.

Suitably still, if the reduction of the electrical operating load drawn by a single one of the loads is insufficient to reduce the sum of the electrical operating loads to not exceed the maximum output power of the power supply, the controller is further configured to: determine which among the loads will first stop drawing power based on the operation to be performed by the image forming apparatus, and reduce the electrical operating load thereof by a smaller amount than the reduction of a different electrical operating load.

The invention also concerns a method of controlling an image forming apparatus comprising a power supply section supplying electric power to a plurality of electric operation sections operating using the electric power, wherein the sum of the maximum drawable power of all electric operation sections exceeds the maximum power output of the power supply, comprising, for a first operation to be undertaken with the image forming apparatus: determining whether the sum of maximum electrical operating loads drawable by the plurality of electric operation sections during the first operation will exceed the power output capacity of the power supply section; and reducing the electrical operating load drawn by at least one of the electric operation sections among the plurality of the electric operation sections such that the operation of the electric operation section continues but the electric operation section draws less power.

Preferably, in the method, during execution of the first operation, determining whether the sum of maximum electrical operating loads drawable by the plurality of electric operation sections during a second operation will exceed the power output capacity of the power supply section; and upon or before executing the second operation, reducing the electrical operating load drawn by at least one of the electric operation sections among the plurality of the electric operation sections such that that the operation of the electric operation section continues but the electric operation section draws less power.

Preferably still, in the method, the electric operation sections having a reduced electrical operating load during the second operation is a different electric operation section than the electric operation section having a reduced electrical operating load during the first operation.

Preferably yet, in the method, at least one electric operation section comprises a motor, and the electrical operating load of the motor is reduced by regulating the rotation speed of the motor to a value smaller than the maximum rotation speed thereof.

Suitably, in the method, the electric operation sections comprise a plurality of motors operable to convey a sheet in a sheet feeding path, said method further comprising; determining whether the sum of maximum electrical operating loads drawable by the plurality of the motors during the first operation will exceed the power output capacity of the power supply section; and reducing the electrical operating load drawn by at least two of the motors such that they operate at the same speed, the speed being lower than the maximum operable speeds thereof.

Suitably still, the method further comprises: upon determining that the sum of maximum electrical operating loads drawable by the plurality of the electric operation sections during the first operation will exceed the power output capacity of the power supply section, reducing the electrical operating load of at least two electric operation sections, wherein the first of the electric operation sections to stop operating during execution of the operation has its electrical operating load reduced by a smaller percentage than the percentage reduction of the electrical operating load of the other electric operation section.

The invention further relates to a non-transitory computer readable medium storing a program causing a computer to execute the method described above.

### DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is a schematic diagram illustrating an example of an image forming apparatus and selectively controlled additional devices according to an embodiment;
Fig. 2 is a block diagram illustrating an example of the circuit constitution of the main portion of the image forming apparatus according to the embodiment; and
Fig. 3 is a flowchart illustrating an example of processing using the controller shown in Fig. 2 according to the embodiment.

### DETAILED DESCRIPTION

In accordance with an embodiment, an image forming apparatus includes a power supply having a maximum power output, a plurality of power loads selectively connectable to the power supply, wherein the sum of the power drawable by all of the power loads exceeds the maximum power output of the power supply; and a controller configured to: determine the power loads to be operable during an operation of the image forming apparatus, determine whether the total drawable power of the loads which will be operable during the operation of the image forming apparatus exceeds the maximum power output of the power supply; and if the total drawable power of the loads which are operable during the operation of the image forming apparatus exceeds the maximum power output of the power supply, limit the power drawable by at least one load such that the sum of the drawable power of all the loads is less than or equal to the maximum power output of the power supply. Hereinafter, an image forming apparatus according to an embodiment is described with reference to the accompanying drawings. In each figure used in the description of the present embodiment, the scale of each member may be different than those in an actual device in order to show each member at a recognizable size.

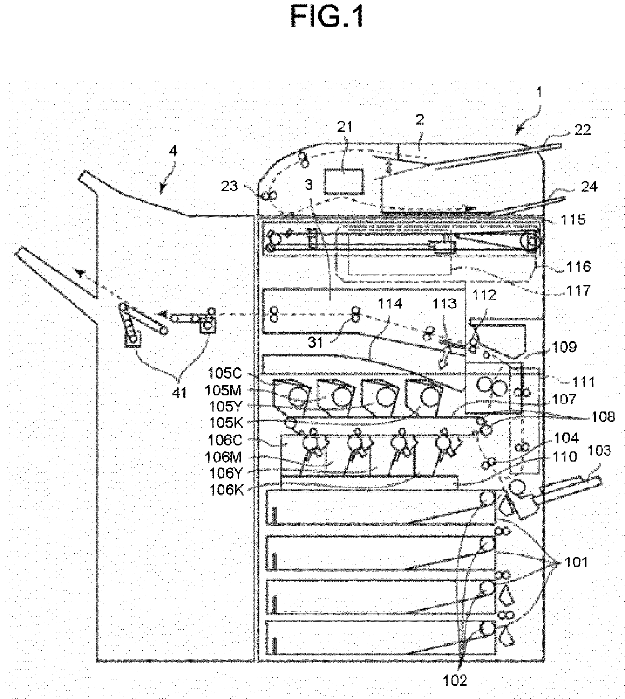

Description is made with reference to Fig. 1 below. Fig. 1 is a schematic diagram illustrating an example of an image forming apparatus 1 and selectively controlled additional devices according to the embodiment. As an example shown in Fig. 1, an automatic document feed device 2, a relay unit 3 and a finisher are attached to the image forming apparatus 1 as selectively controlled additional devices.

The image forming apparatus 1 has a printing function for forming an image on an image receiving medium using a toner or the like. The image receiving medium is, for example, a sheet-like paper or resin material. The image forming apparatus has a scanning function of reading an image from an image receiving medium on which an image is formed. Further, the image forming apparatus has a copy function. The copy function is a function of printing an image read from the image receiving medium using the scanning function on another image receiving medium using the printing function. The image forming apparatus is, for example, a MFP, a copying machine or a printer. The image forming apparatus 1 includes a sheet feed cassette 101, a sheet feed roller 102, a manual feed tray 103, a conveyance roller 104, a plurality of toner cartridges 105 (a cyan cartridge 105C, a magenta cartridge 105M, a yellow cartridge 105Y and a black cartridge 105K), a plurality of image forming sections 106 (a cyan image forming section 106C, a magenta image forming section 106M, a yellow image forming section 106Y and a black image forming section 106K), a transfer belt 107, a transfer roller 108, a fixing section 109, a waste toner box 110, a duplex unit 111, a sheet discharge roller 112, a conveyance path switching gate 113, an in-body sheet discharge tray 114, a scanner unit 115, a control panel 116 and a touch panel 117.

The sheet feed cassette 101 accommodates therein one or more sheet-like image receiving media used for printing.

The sheet feed roller 102 rotates by operation of a motor, and conveys a sheet accommodated in the sheet feed cassette 101 from the sheet feed cassette 101.

The manual feed tray 103 is used for manually feeding a sheet for printing thereon.

The conveyance roller 104 rotates by operation of the motor to convey the sheet for printing.

The cyan cartridge 105C, the magenta cartridge 105M, the yellow cartridge 105Y, and the black cartridge 105K store recording material such as toner corresponding to respective colors of CMYK (cyan, magenta, yellow and black). Each toner cartridge 105 supplies the recording material such as the toner to the corresponding image forming section by the operation of the motor. For example, in the case of the cyan cartridge 105C, the recording material is supplied to the cyan image forming section 106C. The color of the recording material is not limited to CMYK, and other colors may be used, and the number of the colors is not limited to four. Alternatively, the recording material may be a special toner or the like. For example, the recording material may be decolorable recording material which becomes decolored at a temperature higher than a predetermined temperature to become substantially non-visible to the human eye.

The cyan image forming section 106C, the magenta image forming section 106M, the yellow image forming section 106Y and the black image forming section 106K correspond to the respective colors of CMYK. In each image forming section 106, an image to be transferred onto a sheet is formed using the recording material of the corresponding color. After the images to be transferred are formed, the image forming sections 106 transfer the images of respective colors superimposed on the transfer belt 107.

The transfer belt 107 is, for example, an endless belt, and is rotatable by operation of a motor. The transfer belt 107 moves to convey the image transferred from each image forming section to the transfer roller 108.

The transfer roller 108 includes two rollers facing each other. The transfer roller 108 rotates by operation of the motor to transfer the image formed on the transfer belt 107 onto a sheet between the two rollers.

The fixing section 109 heats and pressurizes the sheet onto which the image is transferred. As a result, the image transferred onto the sheet is fixed. The fixing section 109 has a heat source such as a heater.

The waste toner box 110 is a container for storing so-called waste toner and the like generated in a printing operation, a cleaning operation or the like. The waste toner box 110 has a function of stirring the waste toner by the operation of the motor.

The duplex unit 111 sets the sheet to a state in which the printing can be executed on a back surface thereof. For example, the duplex unit 111 reverses the front and back surfaces of the sheet by switching the surfaces of the sheet using a roller. The roller rotates by operation of the motor.

The sheet discharge roller 112 rotates by operation of the motor to discharge a sheet on which the printing has ended to the outside of a housing of the image forming apparatus 1.

The conveyance path switching gate 113 operates by operation of the motor to switch paths through which the sheet is conveyed.

The in-body sheet discharge tray 114 is a table on which a sheet discharged to the outside of the housing by the sheet discharge roller 112 is stacked.

The scanner unit 115 reads an image from a sheet-like medium having an image thereon. The scanner unit 115 includes an optical reduction type scanner having an image capturing element such as a CCD (Charge-Coupled Device) image sensor. Alternatively, the scanner unit 115 includes a scanner of a contact image sensor (CIS) system including an image capturing element such as a CMOS (complementary metal-oxide-semiconductor) image sensor. The scanner unit 115 may include a scanner of other well-known types.

The control panel 116 is an operation panel having buttons and a display for an operator to operate the image forming apparatus 1. The control panel 116 functions as an input device for receiving an operation input by the operator of the image forming apparatus 1. The control panel 116 functions as a display device for notifying the operator of the image forming apparatus 1 of various information. The control panel 116 includes a touch panel 117.

The touch panel 117 includes, for example, a display such as a liquid crystal display or an organic EL display, and a touch pad stacked on the display. The display of the touch panel 117 functions as a display device for displaying a screen for notifying the operator of the image forming apparatus 1 of various information. The touch pad of the touch panel 117 functions as an input device for receiving a touch operation by the operator.

The automatic document feed device 2 picks up and conveys an original document placed on the document tray 22. The original document is an image receiving medium, and is, for example, the sheet-like paper or the resin. The original document picked up by the automatic document feed device 2 is scanned while being conveyed. The automatic document feed device picks up the original documents one by one if there are a plurality of original documents on the document tray 22. The automatic document feed device 2 includes a back surface scanner unit 21, a document tray 22, a sheet feed roller 23, and a document discharge tray 24. The automatic document feed device 2 is an example of an selectively controlled additional device.

The back surface scanner unit 21 reads an image from the back surface of the original document. The scanner unit 115 reads the image from the surface of the original document.

The automatic document feed device 2 may have a mechanism for inverting the back and front surfaces of the original document in place of the back surface scanner unit 21. In this case, the scanner unit 115 reads the images on both the back surface and the front surface of an original document. Alternatively, the automatic document feed device 2 may not have the back surface scanner unit 21. In this case, the scanner unit 115 reads an image from only one surface of the original document.

The document tray 22 is a table for placing the original document required to be picked up by the automatic document feed device 2.

The sheet feed roller 23 rotates by operation of the motor to convey the original documents placed on the document tray 22 one by one to the housing.

The document discharge tray 24 is a table to which the original document is conveyed when the automatic document feed device 2 is discharged.

The relay unit 3 conveys the image receiving medium discharged from the image forming apparatus 1 to the finisher 4. The relay unit 3 includes a conveyance roller 31. The relay unit 3 is an example of the selectively controlled additional device. The finisher may be attached to the image forming apparatus 1 without using the relay unit 3. In this case, there is no need to attach the relay unit 3 to the image forming apparatus 1.

The conveyance roller 31 rotates by operation of the motor to convey the image receiving medium.

The finisher 4 has a function of executing some post-processing on the image receiving medium discharged from the image forming apparatus 1. For example, the finisher 4 has a function of executing stapling, punching, folding, cutting, binding or other post-processing on the image receiving medium discharged from the image forming apparatus 1. Alternatively, the finisher 4 has a function of accumulating the image receiving medium discharged from the image forming apparatus 1. The finisher 4 includes a driving section 41.

The driving section 41 operates to realize the function of the finisher 4. For example, the driving section 41 operates by operation of a motor.

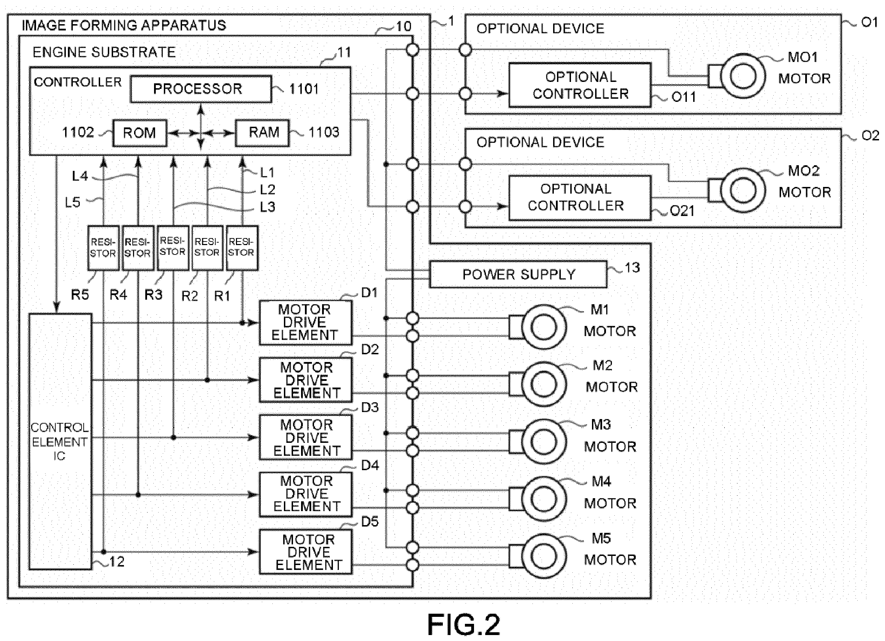

The image forming apparatus 1 and the selectively controlled additional devices are further described with reference to Fig. 2. Fig. 2 is a block diagram illustrating an example of the circuit constitution of respective main portions of the image forming apparatus 1, a selectively controlled additional device O1 and a selectively controlled additional device O2 according to the embodiment.

The image forming apparatus 1 includes a circuit board 10, a controller 11, a control element integrated circuit (IC) 12, a power supply 13, motor drive elements D1 to D5, and motors M1 to M5.

The circuit board 10 is provided with circuits for driving the motors M1 to M5. The circuit board 10 includes the controller 11, the control element IC 12, the motor drive elements D1 to D5, and the like.

The controller 11 issues an instruction to the control element IC 12, to the selectively controlled additional device O1 and to the selectively controlled additional device O2. An EN signal output from the control element IC 12 to each motor drive element is input to the controller 11 through lines L1 to L5. Resistors R1 to R5 are connected in series on the lines L1 to L5. The controller 11 is a computer such as a microcontroller. The controller 11 includes, for example, a processor 1101, a ROM (Read-Only Memory) 1102, and a RAM (Random Access Memory) 1103.

The processor 1101 executes a processing such as calculation and control. The processor 1101 acts as a central part of the controller 11. The processor 1101 operates based on system software, application software, firmware, or the like stored in the ROM 1102. For example, the processor 1101 is a CPU (Central Processing Unit).

The ROM 1102 acts as a main storage device of the controller 11. The ROM 1102 is a nonvolatile memory exclusively used for reading data. The ROM 1102 stores the above programs. The ROM 1102 stores data used for the processor 1101 to execute various processing, various set values, or the like.

The RAM 1103 acts as a main storage device of the controller 11. Data is read from, and written to, the RAM 1103. The RAM 1103 is used as a so-called work area for storing data temporarily used by the processor 1101 in executing various processing.

The program stored in the ROM 1102 includes a control program described with respect to a processing described later. As an example, a control program for the controller 11 may be stored in the ROM 1102. Alternatively, the control program for the controller may be obtained by the MFP, from a removable storage medium such as a magnetic disk, a magneto-optical disk, an optical disk, a semiconductor memory or the like, or by being downloaded thereto via a network, wherein the obtained program is directly used by the controller 11 or is temporarily stored in the RAM 1103. Alternatively the obtained control program may be written into the ROM 1102 under the operation of a system administrator for the MFP or a service engineer. The control element IC 12 controls the motor drive elements D1 to D5 to control the on and off states of the motors M1 to M5. For example, the control element IC 12 sets the EN signal input to the corresponding motor drive element to ON if a motor is required to be started. If it is desired to stop the motor, for example, the control element IC 12 sets the EN signal input to the corresponding motor drive element to OFF. The control element IC 12 controls the motor drive elements D1 to D5 to control a torque or a rotation speed of the corresponding motors M1 to M5.

The power supply 13 supplies the electric power to the motors M1 to M5. The power supply 13 supplies the electric power to the selectively controlled additional device O1 and the selectively controlled additional device O2. The power supply 13 has a predetermined power capacity, i.e., total available power that can be supplied therefrom. The power supply 13 may be a power supply group composed of plural power supplies. The power supply 13 is an example of a power supply section.

A corresponding motor among the motors M1 to M5 is connected to each of the motor drive elements D1 to D5. For example, the motor M1 is connected to the motor drive element D1. The motor drive elements D1 to D5 control the corresponding motors M1 to M5 based on control by the control element IC 12. For example, the motor drive elements D1 to D5 control ON and OFF of currents applied to the corresponding motors M1 to M5 according to the EN signals input from the control element IC 12. As a result, the motors M1 to M5 are started or stopped. Each of the motor drive elements D1 to D5 control the torque or the rotation speed of the corresponding motor by controlling the magnitude of the current applied to each of the corresponding motors M1 to M5.

The motors M1 to M5 are used for driving respective sections of the image forming apparatus 1. Each of the motors M1 to M5 may be a single motor or a motor group composed of a plurality of motors. The image forming apparatus 1 may be provided with a motor used as the plurality of motors in place of the corresponding plurality of motors among the motors M1 to M5. Each of the motors M1 to M5 is an example of an electric operation section operating using electric power.

As an example, the motor M1 is a black printing sheet feed developing motor driving in a monochrome copy mode. The black printing sheet feed developing motor does not operate in a color copy mode.

As an example, the motor M2 is a color printing sheet feed developing motor driving in the color copy mode. The color printing sheet feed developing motor does not operate in the monochrome (black printing) copy mode.

As an example, the motor M3 is a fixing drum motor operating to fix the toner on a sheet by fusing the toner on the sheet. The fixing motor operates in both the color copy mode and the monochrome copy mode.

As an example, the motor M4 is a drum TBU motor for driving a photoconductive drum and a primary transfer unit. As an example, the motor M5 is a duplex printing motor operating, for example, when duplex printing is selected. The duplex printing motor drives the duplex unit 111.

In the image forming apparatus 1, in addition to the motors listed above, a motor for replenishing the toner from each toner cartridge 105 to each image forming section, and a motor for stirring the waste toner in the waste toner box 110 may be provided.

The selectively controlled additional device O1 and the selectively controlled additional device O2 can also include at least two of an automatic document feed device, various finishers, a relay unit, a facsimile unit, an additional sheet feed cassette, a large-capacity sheet feed device, a control panel, a mailbox, or other selectively controlled additional devices. Here, as an example, the selectively controlled additional device O1 is an automatic document feed device 2. As an example, the selectively controlled additional device O2 is assumed to be a sheet discharge unit which is one type of finisher 4. The sheet discharge unit has the function of accumulating the image receiving medium discharged from the image forming apparatus 1.

The selectively controlled additional device O1 includes an optional controller O11 and a motor MO1.

The optional controller O11 controls the motor MO1.

The motor MO1 drives each section of the selectively controlled additional device O1. The motor MO1 can be operated whether or not the image forming apparatus 1 is executing printing. The motor MO1 is an example of the electric operation section.

The selectively controlled additional device O2 includes an optional controller 021 and a motor MO2.

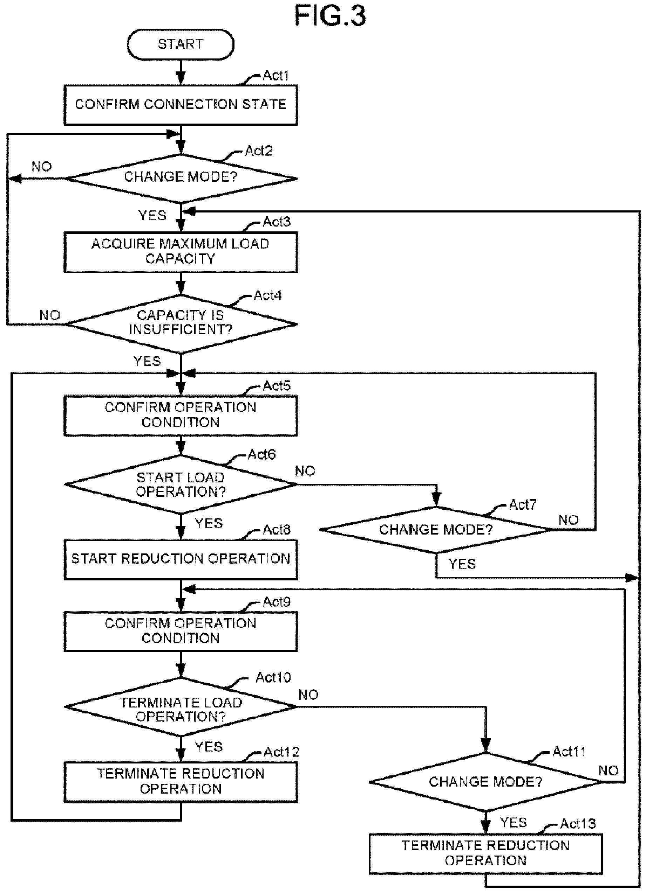

The optional controller 021 controls the motor MO2.
The motor MO2 drives each section of the selectively controlled additional device O2. The motor MO2 is an example of the electric operation section. The operation of the image forming apparatus 1 according to the embodiment is described below with reference to Fig. 3. The contents of a processing in the following operation description are merely an example, and various processing capable of obtaining the same result can be suitably used. Fig. 3 is a flowchart illustrating the processing by the controller 11 of the image forming apparatus 1. The controller 11 executes the processing based on the control program stored in the ROM 1102.

In Act 1 in Fig. 3, the controller 11 of the image forming apparatus 1 confirms a connection state. The connection state indicates which selectively controlled additional device(s) are attached to the image forming apparatus 1.

In Act 2, the controller 11 waits until the image forming apparatus 1 changes an operation mode. For example, the operation mode is determined according to the content of the operation of the control panel 116 selected by the operator of the image forming apparatus 1. Alternatively, the operation mode is determined according to the content of a command transmitted from a host computer connected to the image forming apparatus 1. Alternatively, the operation mode is determined based on other predetermined conditions. The image forming apparatus 1 starts the operation in the corresponding operation mode after the operation mode is determined. The image forming apparatus 1 starts the next operation mode upon or after termination of the operation mode in operation currently, for example. For example, the controller 11 determines that the image forming apparatus 1 has changed the operation mode in response to the determination of the operation mode. If the image forming apparatus 1 changes the operation mode, the controller 11 determines Yes in Act 2 and proceeds to the processing in Act 3.

In Act 3, the controller 11 acquires the maximum electrical operating load in the specific operation mode determined as described above. The maximum electrical operating load is the total electric load, i.e., current drawable by the elements of the image forming apparatus, in the corresponding operation mode, i.e. the specific operating mode the image forming apparatus is operating in or is about to begin operating in. For example, the electrical operating load becomes large if many motors are driving simultaneously. For example, the controller 11 acquires the maximum electrical operating load by calculation using a predetermined calculation formula. The calculation formula is, for example, a sum obtained by adding the maximum electrical operating load of each the motors operating in the operation mode. Alternatively, the controller 11 acquires the maximum electrical operating load from a prepared table. The table associates each operation mode with the maximum electrical operating load for that mode. The table is stored in the ROM 1102, for example.

In Act 4, the controller 11 determines whether or not the output capacity of the power supply 13 is insufficient for the maximum load capacity acquired in Act 3. If the output power capacity of the power supply 13 is not insufficient, i.e., the output of the power supply is sufficient to meet the maximum electrical operating load of the operation to be performed, acquired in Act 3, the controller 11 determines No in Act 4 and returns to the processing in Act 2 and the image forming apparatus performs processing. On the other hand, if the output power capacity of the power supply 13 is insufficient to provide the maximum electrical operating load acquired in Act 3, the controller 11 determines Yes in Act 4 and proceeds to the processing in Act 5.

In Act 5, the controller 11 confirms the operation conditions of the motors M1 to M5, and the motors MO1 and MO2. The controller 11 confirms the EN signal input to the controller 11 in order to confirm the operation conditions of the motors M1 to M5. As a result, the controller 11 acquires the operation condition such as whether or not the motors M1 to M5 is operating, which status is acquired for each motor M1 to M5. The controller 11 detects that the corresponding motor starts operating as an operation condition by confirming that the EN signal for that motor changes from OFF to ON. Furthermore, by confirming that the EN signal changes from ON to OFFN, the controller 11 detects that the corresponding motor has stopped operating as the operating condition thereof. Furthermore, for example, the controller 11 acquires the operating conditions of the motors MO1 and MO2 from the optional controller O11 and the optional controller 021, respectively.

In Act 6, the controller 11 confirms whether or not the image forming apparatus 1 starts a load operation based on the operating condition confirmed in Act 5. A load operation is an operation at the time the maximum electrical operating load exceeds the power output capacity of the power supply 13. The controller 11 derives a total or maximum expected electrical operating load by adding the sum of the normal electrical operating load of the motors when the EN signal is ON to the sum of the normal electrical operating load of the motors of the selectively controlled additional device(s) when in operation. Then, the controller 11 determines that a load operation need be started if the total electrical operating load exceeds the power output capacity of the power supply 13. If the image forming apparatus 1 does not start the load operation, the controller 11 determines No in Act 6 and proceeds to the processing in Act 7.

In Act 7, the controller 11 determines whether or not the image forming apparatus 1 has changed the operation mode. For example, the controller 11 determines whether or not the operation mode has changed in the same method as Act 2. If the image forming apparatus 1 does not change the operation mode, the controller 11 determines No in Act 7 and returns to the processing in Act 5. Thus, the controller 11 repeats the processing in Act 5 to Act 7 until the image forming apparatus 1 carries out the load operation or the image forming apparatus 1 changes the operation mode.

If the image forming apparatus 1 changes the operation mode in the standby state in Act 5 to Act 7, the controller 11 determines Yes in Act 7 and returns to the processing in Act 3.

On the other hand, if the image forming apparatus 1 starts the load operation in the standby state in Act 5 to Act 7, the controller 11 determines Yes in Act 6 and proceeds to the processing in Act 8.

In Act 8, the controller 11 starts a reduction operation to reduce the load on, i.e., the power drawn from, the power supply 13. The controller 11 selects one or a plurality of motors from the motors being operated among the motors M1 to M5 and the motors MO1 and MO2. Then, the controller 11 lowers the rotation speed of, or the current supplied to, each selected motor. As a result, the controller 11 reduces the load that can be drawn by each selected motor. The controller 11 reduces the load that can be drawn so that the maximum electrical operating load during the reduction operation is smaller than the power output capacity of the power supply 13. At this time, for example, the controller 11 reduces the load that can be drawn to a predetermined level, for example by reducing the rotation speed of a motor, or setting a function of a non-motor component to operate at less than full output, thereby reducing the current, and thus the power, required to operate it. Alternatively, the controller 11 obtains a level to which the electrical operating load should be reduced to by a calculation, and reduces the load that can be drawn by a selected component to that level.

In Act 9, similar to Act 5, the controller 11 confirms the operating condition of each of the motors M1 to M5 and the motors MO1 and MO2.

In Act 10, the controller 11 confirms whether or not the image forming apparatus 1 has terminated the load operation based on the operation condition confirmed in Act 9. For example, the controller 11 determines that the load operation is terminated if the total electrical operating load does not exceed the power output capacity of the power supply 13. If the image forming apparatus 1 does not terminate the load operation, the controller 11 determines No in Act 10 and proceeds to the processing in Act 11.

In Act 11, the controller 11 determines whether or not the image forming apparatus 1 has changed the operation mode. For example, the controller 11 determines whether or not the operation mode has changed using the same method as Act 2. If the image forming apparatus 1 does not change the operation mode, the controller 11 determines No in Act 11 and proceeds to the processing in Act 12. Thus, the controller 11 repeats the processing in Act 10 and Act 11 until the image forming apparatus 1 terminates the load operation or the image forming apparatus 1 changes the operation mode.

If the image forming apparatus 1 terminates the load operation in the standby state of Act 10 and Act 11, the controller 11 determines Yes in Act 10 and proceeds to the processing in Act 12.

In Act 12, the controller 11 terminates the load reduction operation started in Act 8. The controller 11 then cancels the reduction of the rotation speed of the motor. The controller 11 returns to the processing in Act 5 after the processing in Act 12.

If the image forming apparatus 1 changes the operation mode in the standby state in Act 10 and Act 11, the controller 11 determines Yes in Act 11 and proceeds to Act 13.

In Act 13, the controller 11 terminates the load reduction operation started in Act 8. The controller 11 thus no longer causes reduction of the rotation speed of the motor. The controller 11 returns to the processing in Act 3 after the processing in Act 13.

As an example, it is assumed that the load drawn without reduction is 2 amperes for each of the motors M1 to M5, and for the motors MO1 and MO2. At this time, according to the operation described above, the controller 11 executes the operation as shown in the following Table 1 as an example.

**Table 1**

| APPARATUS OPERATION MODE | | MOTOR LOAD CURRENT OUTPUT RATE | | | | | | |
|---|---|---|---|---|---|---|---|---|
| | | APPARATUS STANDARD MOUNTED MOTOR | | | | | OPTIONAL DEVICE MOUNTED MOTOR | |
| | | M1 | M2 | M3 | M4 | M5 | MO1 | MO2 |
| APPARATUS STANDARD | COLOR SIMPLEX COPY | - | 100% | 100% | 100% | - | - | - |
| | MONOCHROME SIMPLEX COPY | 100 % | - | 100% | 100% | - | - | - |
| | COLOR DUPLEX COPY | - | 100% | 100% | 100% | 100% | - | - |
| | MONOCHROME DUPLEX COPY | 100% | - | 100% | 100% | 100% | - | - |
| APPARATUS STANDARD + OPTIONAL DEVICE O2 (SHEET DISCHARGE UNIT) | COLOR SIMPLEX COPY | - | 100% | 100% | 100% | - | - | 100% |
| | MONOCHROME SIMPLEX COPY | 100% | - | 100% | 100% | - | - | 100% |
| | MONOCHROME DUPLEX COPY | - | 100% | 100% | 100% | 100% | - | 100% |
| | COLOR DUPLEX COPY | 100% | - | 100% | 100% | 100% | - | 100% |
| APPARATUS STANDARD + OPTIONAL DEVICE O1 [AUTOMATIC DOCUMENT FEED DEVICE) + OPTIONAL DEVICE O2 (SHEET DISCHARGE UNIT) | COLOR SIMPLEX COPY | - | 60% | 60% | 60% | - | 100% | 60% |
| | MONOCHROME SIMPLEX COPY | 60% | - | 60% | 60% | - | 100% | 60% |
| | COLOR DUPLEX COPY | - | 60% | 60% | 60% | 60% | 100% | 60% |
| | MONOCHROME DUPLEX COPY | 60% | - | 60% | 60% | 60% | 100% | 60% |

As shown in Table 1, if the selectively controlled additional device O1 and the selectively controlled additional device O2 do not operate, the controller 11 enables the motors (among motors M1 to M5) to operate at 100% of their power requirements in all of a color simplex copy mode, a monochrome simplex copy mode, a color duplex copy mode and a monochrome duplex copy mode. In other words, since the power output capacity of the power supply 13 is equal to or greater than the maximum electrical operating load, the controller 11 does not perform a power reduction operation to reduce the operating speed of the motors of the selectively controlled additional devices 01 and 02. An indication of a "-" in Table 1 indicates that the relevant motor does not operate in the corresponding mode. Even in the case in which the selectively controlled additional device O1 is operated and the selectively controlled additional device O2 is not operated, the controller 11 can enable the motor to operate at up to 100% of its power requirements in all of the color simplex copy mode, the monochrome simplex copy mode, the color duplex copy mode and the monochrome duplex copy mode. Since the power capacity of the power supply 13 is equal to or greater than the maximum load capacity, the controller 11 does not perform the reduction operation.

In a case of operating both the selectively controlled additional device O1 and the selectively controlled additional device O2, the controller 11 reduces the available power drawn by the motors M1 to M5 and MO2 in each mode of the color simplex copy mode, the monochrome simplex copy mode, the color duplex copy mode and the monochrome duplex copy mode at the time of the reduction operation by reducing their rotation speed or current draw. The controller 11 reduces the available power drawn by the driving motors among the motors M1 to M5 and the motor MO2 by reducing their operating speed such that they draw only 60% of their maximum possible power during the period of the reduction operation. Thereafter, controller 11 enables the motor MO1 to operate at 100% by the controller 11 not reducing the power (current) drawn by the motor MO1. If the reduction operation is not performed, in the state in which the selectively controlled additional device O1 and the selectively controlled additional device O2 are attached to the image forming apparatus 1, the maximum electrical operating load is 12 amperes maximum. Therefore, conventionally, a power supply with a current output capacity of 12 amperes or more is required. On the other hand, in a case of performing the reduction operation, operation of the image forming apparatus is enabled by a power supply having a current output capacity of less than 12 amperes.

The 60% threshold set forth above is merely an example, and it does not limit the level to which the current drawn by a motor is reduced. However, it is assumed that the controller 11 changes the operating mode of a motor to reduce the current drawn by the motor to the extent that the motor does not stop. Therefore, the controller 11 may set the current limit of the reduced current to be less than or more than 60% as long as the motors do not stop at that reduced current. However, for example, if the motor stops operating in the case where the drawn current is reduced to 60%, the controller 11 needs to increase the current to be greater than 60%. For example, the level to which the current, and thus the power, is reduced is determined by a designer of the image forming apparatus 1. Alternatively, the controller 11 may determine the level to which the current should be reduced by monitoring the electrical operating load of each section or the like. In the example of Table 1, the electrical operating load reduced level is uniformly set to 60% of the normal or maximum current drawn by the motor, but it may be different for each motor and each mode. However, if there are rollers with different speeds on the same path, it is considered that operating the motors at different speeds may cause a paper jam, and thus, in order to make the amount of the roller speed decreases on the same sheet path almost equal to each other, it is preferable to reduce the current or power drawn be each of the motors to or by the same level. For example, the motors M1 to M5 are arranged on the same path relating to the sheet feeding and the printing. The motors M1 to M5 are the sheet feeding motors.

In the image forming apparatus 1, even in the same operation mode, there is a case in which the driving motor operations are different due to timing. For example, a case is considered in which the original document is set in the automatic document feed device (controlled additional device O1) to be subjected to color duplex copying, and the sheet-like image receiving medium discharged from the image forming apparatus 1 is accumulated in the sheet discharge unit (controlled additional device O2). When the scanning is initially carried out, the motor of the automatic document feed device operates. After that, once the printing is started, the sheet feed type motor operates. Thereby, for example, if the image forming apparatus 1 enters a load operation state, the controller 11 starts the load reduction operation. After that, if the scanning is terminated, the driving of the motor of the automatic document feed device is stopped and the electrical operating load decreases. Thereby, if the image forming apparatus 1 is no longer in the load operation state, the controller 11 terminates the load reduction operation. Therefore, as shown in Table 1, by enabling the motor MO1 to operate at 100% of capacity at the time of the reduction operation, the time taken for scanning is not increased and the reduction operation can be completed quickly. The copying operation of the image forming apparatus 1 includes an operation relating to the scanning function and an operation relating to the printing function. The operation relating to the scanning function is terminated before the operation relating to the printing function begins.

According to an embodiment, the image forming apparatus 1 reduces the electrical operating load of the motors of the image forming apparatus 1 if the power output capacity of the power supply 13 is insufficient to operate the motors simultaneously at their full power draw. At this time, the controller 11 reduces the electrical operating load to a value such that the motor(s) does not stop, i.e., the current which can be drawn by the motor is sufficient to cause the shaft of the motor to rotate. Therefore, the image forming apparatus 1 of the embodiment can operate even if the available power is smaller than the power requirements at full operational capability of all of the elements of the image forming apparatus that can draw power or current from the power supply. The size of the image forming apparatus 1 of the embodiment can be reduced as the power draw can be reduced. Further, since the electrical operating load of the motor is reduced, but not to the level that the motor stops, the image forming apparatus 1 can perform various operations even during the reduction operation.

According to the embodiment, the image forming apparatus 1 reduces the electrical operating load of motors of the selectively controlled additional device if the power output capacity of the power supply 13 is insufficient to simultaneously drive all of the elements drawing power from the power supply. At this time, the controller 11 reduces their electrical operating load to a level at which the motor does not stop. Therefore, the image forming apparatus 1 of the embodiment can operate even if the available power form the power supply (available power) is less than that required to simultaneously drive all of the elements drawing power from the power supply. Further, since the electrical operating load is reduced to a level where the motor does not stop, the selectively controlled additional device can perform various operations even during the reduction operation.

According to the embodiment, in the operation mode in which the power output capacity of the power supply 13 is not insufficient for the maximum electrical operating load, the image forming apparatus 1 does not carry out the processing of monitoring whether or not the image forming apparatus 1 should start the load operation. Therefore, the image forming apparatus 1 can reduce the power consumption compared with the case in which the monitoring is performed at all times.

According to the embodiment, the image forming apparatus 1 terminates the reduction operation if the image forming apparatus 1 terminates the load operation. Therefore, the image forming apparatus 1 can suppress a decrease in the speed of copying or the like compared with a case in which the reduction operation is not terminated if the load operation is terminated. According to the embodiment, the image forming apparatus 1 does not reduce the current supplied to the motor relating to the operation terminated earlier. By doing this, it is possible to shorten the duration of the reduction operation compared with a case of reducing the current or power supplied to the motor relating to the operation terminated earlier. The image forming apparatus 1 can suppress the decrease in speed of copying or the like by shortening the duration of the reduction operation. The case of not reducing the current or power supplied to the motor relating to the operation terminated earlier is contained in the case of setting the level to which the current or power is reduced to be smaller as compared with the motor current or power reduction of another operation.

According to the embodiment, in the image forming apparatus 1, the target of which the current or power reduction is the motor. Since the motor consumes a relatively large amount of the electric power, it is considered that comparatively large effect can be obtained in reducing the motor current or power by having the motor be the target of the electrical operating load reduction. Even if the rotation speed of the motor is lowered, the operation of the image forming apparatus 1 can be continued without stopping.

The above-described embodiment can also be modified as follows.

In the above embodiment, the controller 11 does not reduce the current supplied to the motor MO1. However, the controller 11 may reduce the electrical operating load of the motor MO1. In this case, it is preferable that the level to which the current or power drawn by the motor MO1 is reduced is less than the level to which the current or power drawn by the sheet feed type motor is reduced. The motor MO1 relates to an operation terminated earlier than other operations. Therefore, the controller 11 terminates the operation earlier by reducing the level of current or power reduction of the motor MO1 compared to a motor relating to another operation. As a result, the controller 11 can shorten the duration of the reduction operation.

The controller 11 may change the level to which the electrical operating load is reduced if the electrical operating load requirement change during the reduction operation. By doing this, if the power capacity of the power supply 13 is sufficient during the reduction operation, the level to which the load capacity is reduced can be relaxed. This makes it possible to suppress the decrease in operating speed such as during copying or the like. In this case, the controller 11 may reduce the electrical operating load in such a manner that the electrical operating load capacity in Act 8 is smaller than the power output capacity of the power supply 13 without reducing the electrical operating load in such a manner that the maximum electrical operating load during the reduction operation is smaller than the power output capacity of the power supply 13. This is because the controller 11 can increase the level to which the electrical operating load is reduced if the expected electrical operating load will increase during the reduction operation. As a result, the controller 11 can suppress the decrease in speed such as during copying or the like.

The reduction of the electrical operating load as described above is changed, for example, as follows. If the controller 11 determines No in Act 10, the controller 11 confirms whether or not the expected electrical operating load capacity has changed. Then, the controller 11 changes the reduction level of the electrical operating load according to the change if the expected electrical operating load changes. The controller 11 relaxes the reduction level of the electrical operating load if the expected electrical operating load decreases. The controller 11 increases the reduction level of the electrical operating load if the expected electrical operating load increases. Thereafter, the controller 11 proceeds to the processing in Act 11. The controller 11 also proceeds to the processing in Act 11 in a case in which the electrical operating load is not changing.

Components that consume power other than the motor may be connected to the power supply 13. Then, the controller 11 may reduce the power or current supplied to those components. The components include, for example, the control panel 116, various sensors, an interface such as a USB (universal serial bus), a reader such as an IC (integrated circuit) card, a heat source included in the fixing section 109, the scanner unit 115, and a processor, or a memory. In the case of the control panel, the controller 11 reduces the power supplied thereto, and thus the overall electrical operating load, by lowering the brightness of the backlight of the touch panel 117, for example. In the case of various sensors, the controller 11 reduces the power supplied thereto, and thus the overall electrical operating load, by reducing the number of times the sensor performs a measurement per hour, for example. In the case of the interface such as the USB, the controller 11 reduces the power supplied thereto, and thus the overall electrical operating load, by reducing the upper limit of the electric power supplied from the interface, for example. In the case of the reader such as an IC card, the controller 11 reduces the power supplied thereto, and thus the overall electrical operating load, by narrowing a sensing range of a non-contact IC card, for example. In the case of the heat source provided in the fixing section 109, the controller 11 reduces the power supplied thereto, and thus the overall electrical operating load, by reducing the amount of heat generated by the heat source, for example. In the case of the scanner unit 115, the controller 11 reduces the power supplied thereto, and thus the overall electrical operating load, by reducing the speed of the motor of the scanner unit 115 or lowering the brightness of the light of the scanner unit 115, for example. In the case of the processor, the controller 11 reduces the power supplied thereto, and thus the overall electrical operating load, by underclocking the processor, for example. In the case of the memory, the controller 11 reduces the power supplied thereto, and thus the overall electrical operating load, by underclocking the memory, for example. However, it is preferable that the controller 11 reduces the electrical operating load of a component such that the operation of the component is not stopped in the case of the components described above. Each of the above components is an example of the electric operation section.

As described above, by reducing the power supplied to components other than the motor, the image forming apparatus 1 can further reduce the output power capacity required of the power supply compared with the case of reducing the power supplied to only the motor. The controller 11 reduces the power supplied to a component to the extent that the operation of the component does not stop. Therefore, the controller 11 can set each function relating to each of the above-mentioned components in a usable state even during the reduction operation.

The image forming apparatus 1 may have a motor in addition to the motors M1 to M5. The motor may be the target of the electrical operating load reduction. For example, the motor is included in the waste toner box 110. For example, the motor is included in the toner cartridge 105. Both of these two motors are not sheet feed type motors but can operate independently.

In the above embodiment, the image forming apparatus 1 uses a laser printer for printing. However, the image forming apparatus of the embodiment may carry out printing by other printers such as an inkjet printer. The image forming apparatus of the embodiment may be a 3D printer.

The controller 11 may reduce the power supplied to only the motor of the selectively controlled additional device without reducing the power supplied to the motor of the image forming apparatus 1. The controller 11 may reduce the power supplied to the motor of the image forming apparatus 1 without reducing the power supplied to the motor of the selectively controlled additional device.

The power output capacity of the power supply 13 may be obtained by subtracting a certain margin from the actual power output capacity thereof. The actual power output capacity of the power supply 13 or the power capacity obtained by subtracting a certain margin is an example of the capacity set according to the power output capacity.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention. The accompanying claims and their equivalents are intended to cover such forms or modifications as would fall within the scope of the invention.

## Claims

1. An image forming apparatus, comprising:
a power supply having a maximum power output;
a plurality of power loads selectively connectable to the power supply, wherein a total of a drawable power by all of the power loads exceeds the maximum power output of the power supply; and
a controller configured to:
determine the power loads to be operable during an operation of the image forming apparatus;
determine whether the total of the drawable power of the power loads which will be operable during the operation of the image forming apparatus exceeds the maximum power output of the power supply; and
if the total of the drawable power of the power loads which are operable during the operation of the image forming apparatus exceeds the maximum power output of the power supply, limit the drawable power by at least one power load such that the total of the drawable power of all of the power loads is less than or equal to the maximum power output of the power supply.

2. The image forming apparatus according to claim 1, further comprising:
a plurality of motors configured to move a sheet on which an image may be printed along a conveyance path; and
at least one selectively controlled additional device, wherein
if the total of the drawable power during the operation of the image forming apparatus will exceed the maximum power output of the power supply, the controller limits a drawn power by the selectively controlled additional device such that the total of the drawable power of all the power loads during the operation of the image forming apparatus is less than or equal to the maximum power output of the power supply.

3. The image forming apparatus of claim 2, wherein the at least one selectively controlled additional device comprises a motor, and the controller limits the drawn power by the motor.

4. The image forming apparatus according to claim 1, further comprising:
a plurality of motors configured to move a sheet on which an image may be printed on a conveyance path therethrough, wherein
the controller is configured to limit a drawn power by at least two of the motors of the plurality of motors configured to move a sheet on which an image may be printed on a conveyance path therethrough if the total of the drawable power of the power loads which are operable during the operation of the image forming apparatus exceeds the maximum power output of the power supply, to reduce their rotation speeds by the same amount.

5. The image forming apparatus according to claim 1, wherein
the controller is further configured to determine, during the operation of the image forming apparatus, a change in the total of the drawable power; and
if the change in the total of the drawable power will exceed the maximum power output of the power supply, control one or more power loads such that they thereafter draw less than a maximum drawable power thereof.

6. The image forming apparatus of claim 5, wherein the controller is configured to determine a drawn power of the power loads.

7. The image forming apparatus of claim 5 or 6, further comprising:
a plurality of motors configured to move a sheet on which an image may be printed on a sheet feeding path; and
at least one selectively controlled additional device; wherein
if the total of the drawable power during the operation the image forming device will exceed the maximum power output of the power supply, the controller limits a drawn power by the selectively controlled additional device such that the drawn power during the operation is less than or equal to the maximum power output of the power supply.

8. The image forming apparatus of claim 7, wherein the at least one selectively controlled additional device comprises a motor having an output speed, and the controller reduces the drawn power by the motor of the at least one selectively controlled additional device by limiting the motor speed to a value less than its maximum operational speed.

9. An image forming apparatus, comprising:
a power supply section configured to supply electric power to a plurality of electric operation sections operating by consuming electric power; and
a controller configured to determine whether a sum of electric operating loads of the plurality of the electric operation sections used simultaneously in an operation of the image forming apparatus exceeds the maximum power output capacity of the power supply section, and control an operation of the electric operation section to reduce the electric operating load of at least one electric operation section to a modified electrical operating load, among the plurality of the electric operation sections, such that the sum of the electric operating loads of the plurality of the electric operation sections, including the modified electrical operating load, does not exceed the maximum power output capacity of the power supply section.

10. The image forming apparatus according to claim 9, wherein
the electric operation section of at least one of the plurality of the electric operation sections comprises a motor.

11. The image forming apparatus according to claim 9 or 10, wherein
the controller controls the operation of the electric operation section to change the electrical operating load of at least one electric operation section among the plurality of the electric operation sections if the sum of the electrical operating loads of the plurality of the electric operation sections changes during the operation of the image forming apparatus where a reduction of electrical operating load is already occurring.

12. The image forming apparatus according to claim 9 or 10, wherein
the controller controls the operation of the electric operation section to change the electric operating load of at least one electric operation section among the plurality of the electric operation sections based on a change in the sum of the electric operating loads of the plurality of the electric operation sections, while controlling a reduction of the electrical operating load.

13. The image forming apparatus according to claim 9, wherein if the reduction of the electric operating load drawn by a single one of the electric operation sections is insufficient to reduce the sum of the electric operating loads to not exceed the maximum output power of the power supply, the controller is further configured to:
determine which among the loads will first stop drawing power based on the operation to be performed by the image forming apparatus, and reduce the electrical operating load thereof by a greater amount than the reduction amount of a different electrical operating load.

14. A method of controlling an image forming apparatus comprising a power supply section supplying electric power to a plurality of electric operation sections operating using the electric power, wherein a sum of a maximum drawable power of all electric operation sections exceeds a maximum power output of the power supply section, comprising, for a first operation to be undertaken with the image forming apparatus:
determining whether the sum of maximum electrical operating loads drawable by the plurality of electric operation sections during the first operation will exceed the power output capacity of the power supply section; and
reducing the electrical operating load drawn by at least one of the electric operation sections among the plurality of the electric operation sections such that the operation of the electric operation section continues but the electric operation section draws less power.

15. A non-transitory computer readable medium storing a program causing a computer to execute the method according to claim 14.
